# EUROPÄISCHE PATENTSCHRIFT

(11) **EP 1 183 416 B1**
(45) Veröffentlichungstag und Bekanntmachung des Hinweises auf die Patenterteilung: **12.11.2003**
(21) Anmeldenummer: 00945682.3
(22) Anmeldetag: 16.05.2000
(51) Int. Cl.: D06F 37/30

(54) **ANTRIEBSVORRICHTUNG FÜR EINE WASCHMASCHINE**
DRIVE DEVICE FOR A WASHING MACHINE
DISPOSITIF D'ENTRAINEMENT POUR MACHINE A LAVER

(30) Priorität: 17.05.1999 DE 19922611
(43) Veröffentlichungstag der Anmeldung: 06.03.2002
(73) Patentinhaber: BSH Bosch und Siemens Hausgeräte GmbH, 81669 München (DE)
(72) Erfinder: BIERBACH, Klaus, D-13629 Berlin (DE); HEYDER, Reinhard, D-13403 Berlin (DE); SKRIPPEK, Jörg, D-14641 Priort (DE)
(86) Internationale Anmeldenummer: EP0004441
(87) Internationale Veröffentlichungsnummer: WO00070138

(56) Entgegenhaltungen:
- EP-A- 0 780 507
- DE-A- 19 726 246
- DE-A- 19 749 391

## Beschreibung

Die Erfindung betrifft eine Antriebsvorrichtung für eine Waschmaschine mit einer innerhalb einer Lagerhülse eines an einer Bodenwand eines Laugenbehälters angebrachten steifen Tragstems über eine wenigstens annähernd horizontal liegende Welle gelagerten Wäschetrommel, wobei die Antriebseinrichtung an der Rückseite des Laugenbehälters montierbar ist und aus einem flachen Motor mit einem Ständertragteil und Erregerwicklungen und mit einem Läufer und magnetisierbaren Polen besteht und die Wäschetrommel direkt antreibt.

Eine derartige Antriebsvorrichtung ist aus der DE 197 26 246 A1 bekannt. Bei dieser Antriebsvorrichtung sind das Ständertragteil und der Läufer des Motors für die Dauer des Transports bis zur endgültigen Montage an einem an der Bodenwand des Laugenbehälters befestigten Tragteil in einer der Betriebsposition entsprechenden relativen Lage des Ständertragteils zum Läufer miteinander lösbar verbunden. Dadurch wird die für den ordnungsgemäßen Betrieb des Motors nötige Einhaltung der inneren Toleranzen (hauptsächlich die Positionierung der Erregerwicklungen in bezug auf die magnetisierbaren Läuferpole) gewährleistet.

Der Erfindung liegt die Aufgabe zugrunde, eine weitere Antriebsvorrichtung der eingangs definierten Gattung zu schaffen, bei der der Motor fertig vormontiert und geprüft beim Herstellerwerk für Waschmaschinen angeliefert werden kann, ohne daß beim Einbau des Motors an der Waschmaschine noch ein Eingriff nötig ist, der die Einhaltung der für den ordnungsgemäßen Betrieb des Motors erforderlichen Toleranzen gefährden könnte. Außerdem soll damit eine Montagevereinfachung im Waschmaschinenwerk einhergehen.

Erfindungsgemäß wird diese Aufgabe dadurch gelöst, daß zusätzlich zu einer Lagerung der Welle, mit der Läufer des Motors verbunden ist, ein weiteres Lager vorhanden ist, über das das Ständertragteil und der Läufer miteinander verbunden sind.

Auf diese Weise kann sicher gestellt werden, daß der Motor im dafür bestens ausgerüsteten Herstellerwerk fertig montiert und geprüft werde. kann, ehe er einem Anwender, z.B. dem Werk eines Waschmaschinenherstellers, geliefert wird. Es ist bei der erfindungsgemäßen Lösung nicht mehr notwendig, Arretierstifte und Arretierschrauben auszudrehen und Distanzhülsen zwischen dem Ständertragteil und der Läuferglocke zu entfernen. Entsprechend erübrigt sich der Rücklauf der Arretierstifte und -schrauben sowie der Distanzhülsen an das Motorenwerk.

Zur erleichterten Montage eines gemäß der Erfindung vormontierten Motors ist eine besonders vorteilhafte Weiterbildung der Erfindung dadurch gekennzeichnet, daß der Läufer die Form einer Glocke hat, deren zentrischer Teil als flache Scheibe ausgebildet ist und auf einem Kreis mit demselben Radius Zugangsbohrungen wie das Ständertragteil Befestigungsbohrungen und wie der Tragstern Gewindelöcher für die Montage des Motors am Tragstern hat.

Ein besonderer Vorteil der Erfindung besteht darin, daß das Ständertragteil und der Läufer gemeinsam aus der Waschmaschine entfernbar sind.

Im übrigen ist die erfindungsgemäße Antriebsvorrichtung vorteilhafterweise am besten dadurch geschützt, daß das Ständertragteil sich über die Erregerwicklungen hinaus erstreckt und sein Rand zusammen mit dem der Glocke eine Labyrinthdichtung bildet.

Eine andere besonders vorteilhafte Fortbildung der Erfindung ist dadurch gekennzeichnet, daß das Ständertragteil eine zentrische Führungshülse aufweist, die über eine definierte Schiebesitz-Passung auf einen Außenzylinder der Lagerhülse des Tragstems setzbar ist. Diese Ausbildung erleichtert die Montage des Motors an der Waschmaschine dadurch, daß der noch arretierte Motor mit seiner Führungshülse lagesicher auf die Lagerhülse aufgesetzt werden kann, so daß die zentrische Bohrung für die Befestigung der Läuferglocke am Wellenzapfen automatisch zentriert ist.

Bei einer vorteilhaften Ausgestaltung der Erfindung weisen das Ständertragteil und die Glocke jeweils auf der dem Zwischenraum zugewandten Seite einen umlaufenden Kragen aus. Beide Kragen sind voneinander durch ein Lager beabstandet, durch das der Läufer auf dem Ständertragteil gehalten wird.

Anhand eines in der Zeichnung dargestellten Ausführungsbeispiels wird die Erfindung nachstehend näher erläutert. Es zeigen jeweils in senkrechter Schnittansicht:
- Fig.1: eine schematische Darstellung der Rückwand eines Laugenbehälters mit einem Tragstern und einem auf den Tragstern aufgesetzten Elektromotor und
- Fig.2: den Elektromotor vor seiner Montage auf den Tragstern

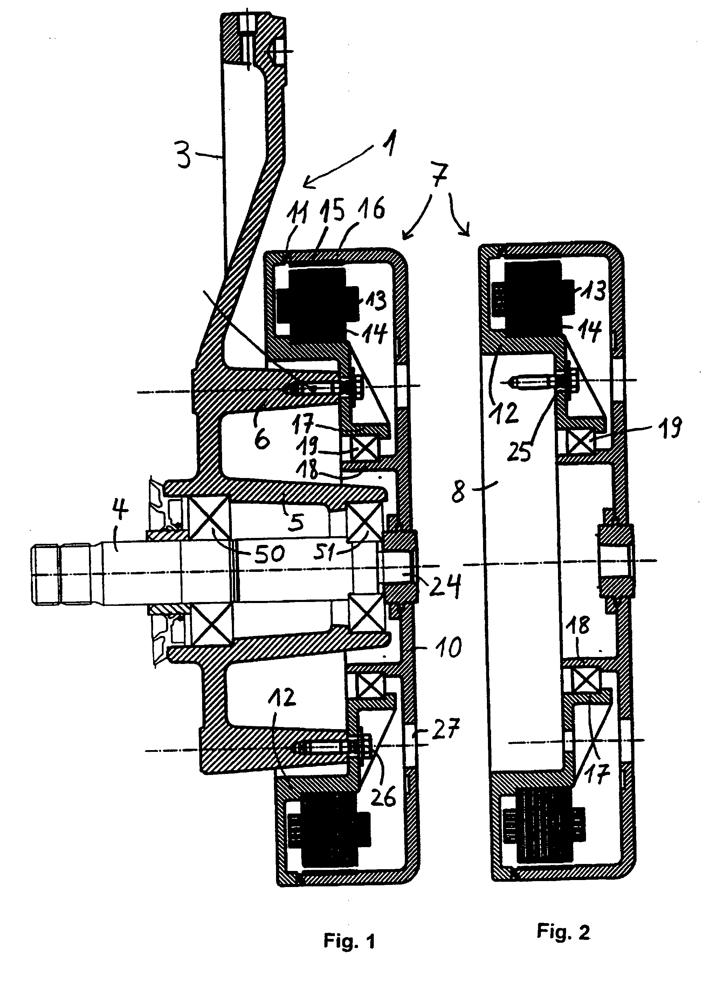

Ein Laugenbehälter in einer Waschmaschine mit einer sich in dem Laugenbehälter drehenden und von vom beschickbaren Wäschetrommel weist einen an seiner Rückwand befestigten, beispielsweise dreistrahligen Tragstern 1 (Fig. 1) auf. Sein nach oben gerichteter Strahl 2 liegt in der Zeichnungsebene der Fig. 1. Die beiden nach unten gerichteten Strahlen zeigen nach hinten bzw. nach vom aus der Zeichnungsebene hinaus und sind deshalb nicht dargestellt. Gemäß Fig. 1 ist der Tragstern 1 mittels nicht dargestellter Schrauben an der rückseitigen Bodenwand 3 des Laugenbehälters befestigt.

Zur Lagerung der Welle 4 der nicht dargestellten Wäschetrommel besitzt der Tragstern 1 eine Lagerhülse 5 mit Wälzlagern 50, 51. Außerdem erstreckt sich in Fig. vom Tragstern 1 ausgehend ein Befestigungsflansch 6, an dem der Motor 7 verschraubt werden kann.

Der in Fig. 1 und 2 dargestellte Motor 7 hat ein tellerförmig gestaltetes Ständertragteil 8, dessen Außenrand 9 sich bis zum Rand der Läuferglocke 10 erstreckt und mit ihm zusammen eine Labyrinthdichtung 11 bildet. Auf dem auskragenden Abschnitt 12 des Ständertragteils 8 sind die Erregerwicklungen 13 mit ihren Blechlamellen 14 am Umfang verteilt. Sie stehen über einen Luftspalt den magnetisierbaren Polen 15 gegenüber, die am Innenumfang des Glockenrandes 16 des Läufers 10 befestigt sind.

Das Ständertragteil 8 hat auf seiner zum Läufer 10 zeigenden Fläche einen Kragen 17, der bis kurz vor die Innenfläche der Läuferglocke 10 reicht. Zu dem Kragen 17 korrespondiert ein konzentrischer Kragen 18 der Läuferglocke 10, der entweder, wie dargestellt, innerhalb des Kragens 17 liegt oder außerhalb. Zwischen den Kragen 17 und 18 liegt ein Lager 19, beispielsweise ein Wälz- oder Kugellager. Durch die Anordnung des Lagers 19 zwischen den Kragen 17 und 18 wird auch der erforderliche Zwischenraum zwischen dem Ständertragteil 8 und der Läuferglocke 10 festgelegt. Das Ständertragteil 8 und die Läuferglocke 10 sind somit in festem Abstand zueinander positioniert.

im Herstellerwerk für Waschmaschinen wird die Läuferglocke dieses Motors 7 an den Gewindestumpf 24 der Welle 4 angesetzt, aufgeschraubt und auf nicht dargestellte Weise mittels einer Schraube in der Position gesichert, in der das Ständertragteil 8 auf den Befestigungsaugen 6 des Tragstems 1 anliegt. Dann werden die Befestigungslöcher 25 im Ständertragteil 8 mit den Befestigungsaugen 6 zur Deckung gebracht und Befestigungsschrauben 26 eingedreht. Als Zugang zu den Befestigungsschrauben 26 dienen die Bearbeitungsöffnungen 27 in der Läuferglocke 10.

Anstelle der Befestigungsaugen 6 kann auch ein umlaufender Flansch an dem Ständertragteil 8 vorgesehen sein.

Die in der Läuferglocke 10 vorgesehenen Durchbrüche 27 erfüllen die zusätzliche Funktion, daß sie eine Kühlung der Ständerwicklungen gewährleisten, so daß sich der Motor bei anforderungsgerechter Dimensionierung nicht überhitzen kann.

Das Ständertragteil 8 läßt sich gemeinsam mit der Läuferglocke 10 aus der Waschmaschine ausbauen.

Der Motor hat somit eine offene Bauform, deren wärmeerzeugende Bauteile von allen Seiten durch die Umgebungsluft gekühlt werden. Selbst die geringe Motordrehzahl beim Waschbetrieb reicht dann noch dazu aus, daß der Läufer eine wärmeabführende Luftbewegung erzeugt.

Vorteilhaft ist der Motor in einer Ausführungsform der Erfindung als elektronisch kommutierter Gleichstrom-Motor ausgeführt, was wegen des Fehlens von Bürsten eine hohe Lebensdauer ermöglicht. In einer besonders vorteilhaften Weiterbildung der Erfindung ist der Läufer wenigstens teilweise aus einem ringförmigen Paket von Dynamoblechen und darauf angeordneten Dauermagnetsegmenten ausgestattet. Die Dauermagnetsegmente ergeben ein kraftvolles Drehmoment und die Dynamobleche bilden einen besonders guten, magnetischen Rückfluß. Die Herstellung der erforderlichen Blechpakete ist durch Automatisierung des Stapelverfahrens relativ unkompliziert und kostengünstig. Vorteilhaft sind die Polpakete des Ständers aus Dynamoblechen zusammengesetzt und tragen Spulen mit den Erregerwicklungen.

Zur erleichterten und reproduzierbar genauen Montage kann die zentrierte Verbindung des Läufers drehfest an der Welle durch eine formschlüssige Profilwellen-, Profilnaben-, Paßfeder-, Kegel- oder Keilnutverbindung ergänzt sein.

In einer weiteren, vorteilhaften Ausführungsform ist der Motor als geschalteter Reluktanz-Motor ausgebildet. in diesem Fall besteht der Läufer aus einem ferromagnetisch relativ schlecht leitenden Material. Der Aufbau des Ständers ist mit dem des elektronisch kommutierten Gleichstrommotors vergleichbar. Der Vorteil besteht insbesondere in einer kostengünstigeren Gestaltung des Läufers, die keine teueren Magnetwerkstoffe erfordert.

Statt bei der oben beschriebenen, von vom beschickbaren Waschmaschine läßt sich die Erfindung auch bei einer von oben beschickbaren Waschmaschine, d. h. bei einem Toplader, einsetzen.

## Patentansprüche

1. Antriebsvorrichtung für eine Waschmaschine mit einer innerhalb einer Lagerhülse (5) eines an einer Bodenwand (3) eines Laugenbehälters angebrachten, steifen Tragstems (1) über eine wenigstens annähernd horizontal liegende Welle (4) gelagerten Wäschetrommel, wobei die Antriebseinrichtung an der Rückseite des Laugenbehälters montierbar ist und aus einem flachen Motor (7) mit einem Ständertragteil (8) und Erregerwicklungen (13) und mit einem Läufer (10) und magnetisierbaren Polen (15) besteht und die Wäschetrommel direkt antreibt, **dadurch gekennzeichnet, daß** zusätzlich zu einer Lagerung (50, 51) der Welle (4), mit der Läufer (10) des Motors (7) verbunden ist, ein weiteres Lager (19) vorhanden ist, über das das Ständertragteil (8) und der Läufer (10) miteinander verbunden sind.

2. Antriebsvorrichtung nach Anspruch 1, **dadurch gekennzeichnet, daß** der Läufer (10, 43) die Form einer Glocke hat, deren zentrischer Teil als flache Scheibe ausgebildet ist und auf einem Kreis mit demselben Radius Zugangsbohrungen (27) aufweist, durch die Befestigungsschrauben (26) zugänglich sind, mit denen für die Montage des Motors (7) das Ständertragteil (8) in entsprechenden Befestigungsbohrungen des Tragstems (1) befestigbar ist.

3. Antriebsvorrichtung nach Anspruch 2, **dadurch gekennzeichnet, daß** der Tragstern (1) einen Befestigungsflansch oder Befestigungsaugen (6) mit den Gewindelöchern zur Aufnahme der Befestigungsschrauben (26) des Ständertragteils (8) aufweist.

4. Antriebsvorrichtung nach einem der Ansprüche 1 bis 3, **dadurch gekennzeichnet, daß** das Ständertragteil (8) einen sich über die Erregerwicklungen (13, 40) hinaus erstreckenden Rand (9) zusammen mit dem Glockenrand (16) der Glocke (10) eine Labyrinthdichtung (11) bildet.

5. Antriebsvorrichtung nach einem der Ansprüche 1 bis 4, **dadurch gekennzeichnet, daß** das Ständertragteil (8) und die Glocke (10) jeweils auf der dem Zwischenraum zugewandten Seite mit einem umlaufenden Kragen versehen ist und daß zwischen den Kragen (17 bzw. 18) das Lager (19) angeordnet ist.

6. Antriebsvorrichtung nach einem der Ansprüche 1 bis 4, **dadurch gekennzeichnet, daß** das Ständertragteil (8) und der Läufer (10) gemeinsam aus der Waschmaschine herausnehmbar sind.

## Claims

1. Drive device for a washing machine with a laundry drum mounted within a bearing sleeve (5) of a rigid support star (1), which is mounted at a base wall (3) of a solution container, by way of an at least approximately horizontally disposed shaft (4), wherein the drive device can be mounted at the rear side of the solution container and consists of a flat motor (7) with a stator support part (8) and excitation windings (13) and with a rotor (10) and magnetisable poles (15) and directly drives the laundry drum, **characterised in that** in addition to a mounting (50, 51) of the shaft (4) with which the rotor (10) of the motor (7) is connected a further bearing (19) by way of which the stator support part (8) and the rotor (10) are connected together is present.

2. Drive device according to claim 1, **characterised in that** the rotor (10, 43) has the form of a bell, the central part of which is formed as a flat disc and has, on a circle with the same radius, access bores (27) through which fastening screws (26) are accessible, by which the stator support part (8) is fastenable in corresponding fastening bores of the support star (1) for mounting of the motor (7).

3. Drive device according to claim 2, **characterised in that** the support star (1) has a fastening flange or fastening eyes (6) with threaded holes for reception of the fastening screws (26) of the stator support part (8).

4. Drive device according to one of claims 1 to 3, **characterised in that** the stator support part (8) at an edge (9), which extends out beyond the excitation windings (13, 40), forms together with the bell wall (16) of the bell (10) a labyrinth seal (11).

5. Drive device according to one of claims 1 to 4, **characterised in that** the stator support part (8) and the bell (10) are each provided with an encircling collar on the side facing the intermediate space and that the bearing (19) is arranged between the collars (17 and 18).

6. Drive device according to one of claims 1 to 4, **characterised in that** the stator support part (8) and the rotor (10) are withdrawable in common from the washing machine.

## Revendications

1. Dispositif d'entraînement pour lave-linge comprenant un tambour à linge monté dans un manchon support (5) d'une étoile support (1) rigide, fixée à une paroi de fond (3) d'une cuve à lessive, par l'intermédiaire d'un arbre (4) disposé de façon au moins à peu près horizontale, le dispositif d'entraînement, qui est constitué d'un moteur (7) plat avec, d'une part, un élément support formant stator (8) et des enroulements d'excitation (13) et, d'autre part, un rotor (10) et des pôles (15) magnétisables, pouvant être monté sur la face arrière de la cuve à lessive et entraînant directement le tambour à linge, **caractérisé en ce que**, en plus d'un palier (50, 51) de l'arbre (4) auquel est lié le rotor (10) du moteur (7), il est prévu un palier (19) supplémentaire via lequel l'élément support formant stator (8) et le rotor (10) sont liés l'un à l'autre.

2. Dispositif d'entraînement selon la revendication 1, **caractérisé en ce que** le rotor (10, 43) a la forme d'une cloche dont la partie centrale est conformée en disque plat et, sur un cercle ayant le même rayon, présente des ouvertures d'accès (27) qui permettent d'accéder à des vis de fixation (26) à l'aide desquelles l'élément support formant stator (8) peut être fixé dans des trous de fixation correspondants de l'étoile support (1), en vue du montage du moteur (7).

3. Dispositif d'entraînement selon la revendication 2; **caractérisé en ce que** l'étoile support (1) présente une flasque de fixation ou des oeillets de fixation (6) munis de trous taraudés, destinés à recevoir les vis de fixation (26) de l'élément support formant stator (8).

4. Dispositif d'entraînement selon l'une des revendications 1 à 3, **caractérisé en ce que** l'élément support formant stator (8) a un bord (9) qui s'étend au-delà des enroulements d'excitation (13, 40) et forme une garniture d'étanchéité à labyrinthe (11) avec le bord (16) de la cloche (10).

5. Dispositif d'entraînement selon l'une des revendications 1 à 4, **caractérisé en ce que** l'élément support formant stator (8) et la cloche (10) comportent chacun un collet périphérique, sur leur côté tourné vers l'espace libre, et que le palier (19) est disposé entre ces collets (17 et 18).

6. Dispositif d'entraînement selon l'une des revendications 1 à 4, **caractérisé en ce que** l'élément support formant stator (8) et le rotor (10) peuvent être retirés ensemble du lave-linge.
